# FASCICULE DE BREVET EUROPEEN

(11) **EP 0 490 721 B1**
(45) Date de publication et mention de la délivrance du brevet: **25.01.1995**
(21) Numéro de dépôt: 91403126.5
(22) Date de dépôt: 20.11.1991
(51) Int. Cl.: B60T 8/96, B60T 8/26

(54) **Système de freinage pour véhicule automobile comprenant un moyen de réduction de pression de freinage**
Bremssystem für Kraftfahrzeuge mit Bremsdruckreduziermittel
Braking system for vehicles comprising pressure reducing means

(30) Priorité: 13.12.1990 FR 9015609
(43) Date de publication de la demande: 17.06.1992
(73) Titulaire: ALLIEDSIGNAL EUROPE SERVICES TECHNIQUES, 93700 Drancy (FR)
(72) Inventeur: Moinard, Patrice, BENDIX EUROPE, F-93700 Drancy (FR); Castel, Philippe, BENDIX EUROPE, F-93700 Drancy (FR); Levrai, Roland, BENDIX EUROPE, F-93700 Drancy (FR)
(74) Mandataire: Bentz, Jean-Paul

(56) Documents cités:
- EP-A- 0 209 278
- DE-A- 3 742 364
- FR-A- 2 624 462
- PATENT ABSTRACTS OF JAPAN vol. 9, no. 229 (M-413)(1952), 14 septembre 1985; & JP - A - 60085051 (NISSAN) 14.05.1985

## Description

La présente invention concerne un système pour véhicule automobile, comprenant un maître-cylindre, un réservoir basse pression, un dispositif de surveillance et un moyen de réduction de pression implanté dans un circuit de freinage de l'essieu arrière du véhicule pour en réduire la pression dans des cas déterminés, ce moyen de réduction de pression comportant un piston de régulation coulissant de manière étanche dans un alésage et sollicité par au moins un ressort dans le sens d'ouverture d'une valve de régulation.

Un système de freinage de ce type est notamment divulgué dans la demande de brevet français FR 2 624 462, correspondant à la demande de brevet allemand DE 3 742 173.

Selon ce document, une conduite de dérivation qui peut être ouverte ou fermée par une électrovanne court-circuite le moyen de réduction de pression de freinage. Ce système de freinage présente un grave inconvénient en ce que, en cas de défaillance de la fonction antiblocage, le clapet de valve de l'électrovanne, qui doit alors reposer sur son siège de façon à fermer cette conduite de dérivation, est sujet à une forte différence de pressions s'exerçant sur ses faces opposées. Il en résulte l'obligation d'utiliser un ressort de rappel au repos de ce clapet présentant une précontrainte importante que doit vaincre en fonctionnement normal, la force engendrée par le solenoïde de l'électrovanne. Ainsi, l'électrovanne est d'un type coûteux puisqu'elle doit être sur-dimensionnée pour que le système de freinage décrit soit fiable.

La présente invention a pour but d'obvier à cet inconvénient en mettant en oeuvre une électrovanne qui ne soit pas sur-dimensionnée dans un système de freinage présentant une fiabilité nettement supérieure.

On sait qu'un moyen classique de réduction de pression comporte un piston de régulation coulissant de façon étanche dans un alésage et sollicité par au moins un ressort dans le sens d'ouverture d'une valve de régulation.

Selon l'invention, ce ressort est disposé dans une chambre étanche remplie d'un fluide incompressible, et une électrovanne commande une communication entre cette chambre et un réservoir de ce fluide sous basse pression.

Lorsque le véhicule est pourvu d'un dispositif antiblocage, en fonctionnement normal de la fonction antiblocage, cette communication est fermée tandis qu'elle est ouverte en cas de mauvais fonctionnement.

De préférence, cette même communication est fermée en cas de défaillance d'un des deux circuits de freinage équipant normalement une automobile.

L'invention sera mieux comprise et d'autres buts, avantages et caractéristiques de celle-ci apparaîtront plus clairement à la lecture de la description qui suit d'un mode de réalisation donné à titre non limitatif et à laquelle sont jointes deux planches de dessins sur lesquelles :
- La Figure 1 représente schématiquement un système de freinage incluant un moyen de réduction de pression conforme à l'invention, et
- La Figure 2 illustre schématiquement un autre mode de réalisation du moyen de réduction de pression conformément à l'invention.

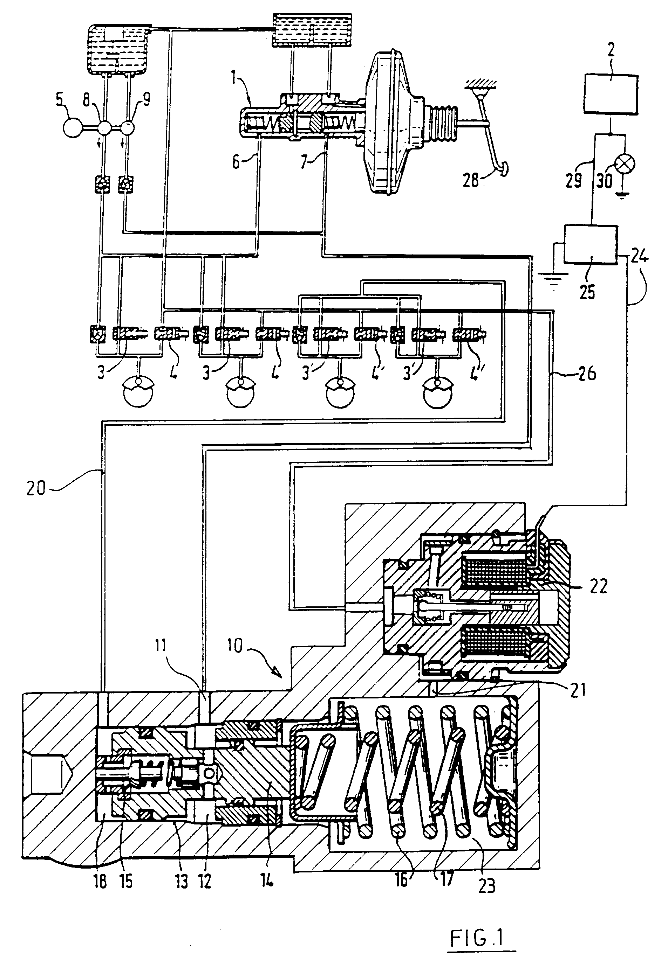

La Figure 1 représente schématiquement la partie hydraulique d'un système de freinage antiblocage. Par souci de clarté, la partie électrique du système de freinage n'est représentée que dans la mesure où elle est importante pour le présent mode de réalisation de l'invention. Ainsi, les capteurs pour déterminer la vitesse de rotation des roues, la liaison de ces capteurs avec le dispositif de commande antiblocage 2, dans lequel est également intégré le dispositif de surveillance, la liaison électrique entre les électrovannes 3, 4, 3', 4' de modulation de pression et le moteur 5, et le dispositif de commande antiblocage 2 ne sont pas représentés. Divers commutateurs et capteurs de surveillance du fonctionnement du système ne sont pas non plus représentés.

Le système de freinage comprend un maître-cylindre tandem 1 d'où un circuit de freinage d'essieu avant 6 et un circuit de freinage d'essieu arrière 7 mènent aux freins de roues associés à travers des électrovannes 3 et 3' servant d'entrée. Pour faire chuter la pression lors d'une régulation antiblocage, au cours de laquelle le moteur 5 entraîne les deux pompes 8 et 9, les freins de roues peuvent chacun être reliés, à travers une électrovanne 4, 4' servant de sortie, à une conduite de retour menant à un réservoir sous basse pression.

Sur le circuit de freinage d'essieu arrière 7 est prévu un dispositif de réduction de pression de freinage 10 de type connu dont l'entrée 11 est reliée à la chambre d'entrée 12. Ce dispositif de réduction de pression se compose, pour l'essentiel, d'un piston de régulation 14 qui est guidé axialement et de manière coulissante et étanche dans l'alésage 13 et de la valve de régulation 15 implantée dans ce piston, le piston de régulation 14 étant sollicité par les ressorts de commande 16, 17 dans le sens d'ouverture de la valve de régulation à sollicitation élastique 15. Un perçage dans lequel est installée cette valve de régulation fait communiquer les chambres d'entrée et de sortie 12, 18 au repos. De la chambre de sortie 18 du dispositif, un canal 20 s'étend à travers les électrovannes 3' vers les freins de roues arrière.

Les ressorts de commande 16, 17 sont disposés dans une chambre étanche 23 ménagée dans l'alésage 13 du dispositif de réduction de pression de freinage 10.

Cette chambre étanche 23 communique, par l'intermédiaire d'un orifice 21, d'une électrovanne 22, et d'un conduit 26 avec un réservoir du fluide de freinage sous basse pression.

L'électrovanne 22 est conçue sous la forme d'une électrovanne ouverte à l'état désexcité et actionnée par le relais 25 auquel elle est reliée par l'intermédiaire de la ligne 24. Le relais 25 ferme l'électrovanne 22 lorsqu'aucune défaillance de la fonction antiblocage n'est détectée, la ligne 29 reliant le relais 25 au dispositif de surveillance prévu dans le dispositif de commande antiblocage 2. Si le dispositif de surveillance détecte un mauvais fonctionnement, une tension de commande est produite qui, d'une part, allume le voyant 30 et, d'autre part, isole la ligne 24 de la source de tension.

Ainsi, en fonctionnement normal, l'électrovanne 22 est excitée et coupe la communication entre la chambre 23 et le conduit 26 menant au réservoir. Il en résulte la présence substantielle d'un mur hydraulique dans la chambre 23. Le dispositif de réduction de pression de freinage 10 n'a alors aucun rôle puisque le piston de régulation 14 ne peut pas se déplacer à l'encontre de ce mur hydraulique. Par contre, en cas de mauvais fonctionnement de la fonction antiblocage ou de défaillance électrique, l'électrovanne 22 ouvre cette même communication, éliminant ainsi tout mur hydraulique dans la chambre 23. Le piston de régulation 14 est alors libre de se déplacer sous l'effet de la pression d'entrée du fluide de freinage de façon connue en soi.

Un tel système est particulièrement fiable notamment parce que le clapet de l'électrovanne 22 n'est pas soumis à un différentiel de pression tendant à avoir un effet pervers, et que le dispositif de régulation de pression 10 est toujours relié en série avec les freins de roues arrière.

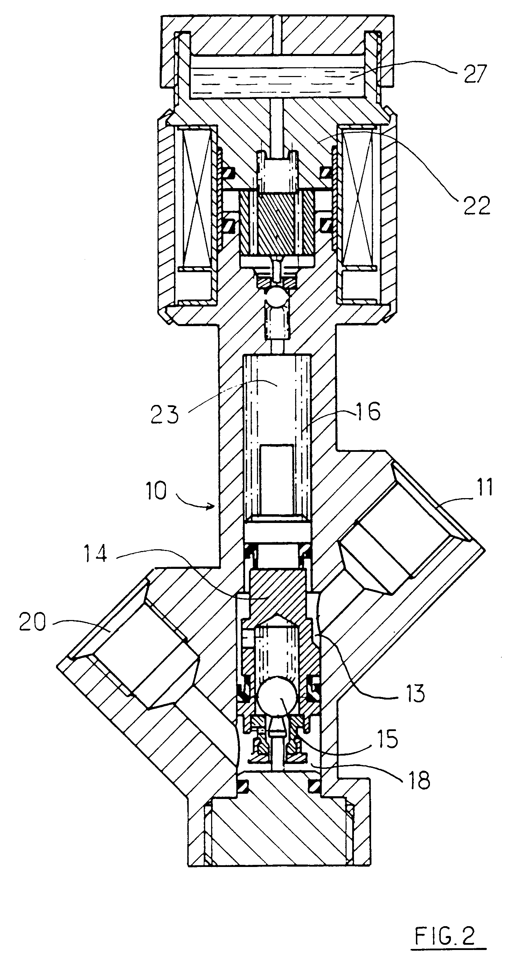

Dans le mode de réalisation partiellement représenté Figure 2, le réservoir 27 de fluide sous basse pression est disposé au-dessus de l'électrovanne 22 et est propre au dispositif de réduction de pression 10. Le fonctionnement est identique à celui décrit précédemment.

Bien que seuls certains modes préférés de réalisation de l'invention aient été décrits et représentés, il est évident que toute modification apportée dans le même esprit par l'homme du métier ne sortirait pas du cadre de la présente invention, tel que défini par la revendication annexée.

Notamment, bien que le système soit décrit avec l'électrovanne 22 excitée en permanence tant que la fonction antiblocage n'est pas défaillante, on peut, par mesure d'économie, n'exciter l'électrovanne 22 que si la fonction antiblocage n'est pas défaillante et si la pédale de frein 28 est enfoncée.

Par ailleurs, bien que le système décrit ci-avant inclut un dispositif d'antiblocage, le moyen de réduction de pression conforme à l'invention peut être mis en oeuvre également en l'absence d'un tel dispositif. En effet, de façon tout à fait indépendante de ce dispositif, il peut être favorablement prévu que le dispositif de surveillance surveille l'état des circuits hydrauliques de freinage et qu'en cas de défaillance de l'un deux, l'électrovanne 22 soit excitée de manière à augmenter le freinage sur des roues arrière non défaillantes.

## Revendications

1. Système de freinage pour véhicule automobile, comprenant un maître-cylindre (1), un réservoir basse pression, un dispositif de surveillance et un moyen (10) de réduction de pression implanté dans un circuit de freinage de l'essieu arrière du véhicule pour en réduire la pression dans des cas déterminés, ce moyen de réduction de pression comportant un piston de régulation (14) coulissant de manière étanche dans un alésage (13) et sollicité par au moins un ressort (16, 17) dans le sens d'ouverture d'une valve de régulation (15), caractérisé en ce que le dit ressort (16, 17) est disposé dans une chambre étanche remplie d'un fluide incompressible et en ce qu'une électrovanne (22) commande l'ouverture ou la fermeture d'une communication entre la dite chambre et le réservoir basse pression.

2. Système de freinage selon la revendication 1 pour véhicule automobile comportant un dispositif d'antiblocage (2), caractérisé en ce que la dite communication est fermée en fonctionnement normal de la fonction d'antiblocage, tandis qu'elle est ouverte en cas de mauvais fonctionnement de celle-ci.

3. Système de freinage selon la revendication 1 ou 2 caractérisé en ce que la dite communication est fermée en cas de défaillance d'un circuit de freinage.

## Claims

1. Brake system for a motor vehicle, comprising a master cylinder (1), a low-pressure reservoir, a monitoring device and a pressure reduction means (10) installed in a brake circuit of the rear axle of the vehicle in order to reduce the pressure therein in specific circumstances, this pressure reduction means comprising a regulating piston (14) sliding sealingly in a bore (13) and stressed by at least one spring (16, 17) in the opening direction of a regulating valve (15), characterized in that said spring (16, 17) is arranged in a sealed chamber filled with an incompressible fluid, and in that a solenoid valve (22) controls the opening or closing of communication between said chamber and the low-pressure reservoir.

2. Brake system according to claim 1 for a motor vehicle having an anti-lock device (2), characterized in that said communication is closed during the normal operation of the anti-lock function, whereas in the event of incorrect operation of the latter it is opened.

3. Brake system according to claim 1 or 2, characterized in that said communication is closed in the event of a failure of a brake circuit.

## Patentansprüche

1. Bremssystem für Kraftfahrzeuge, mit einem Hauptzylinder (1), einem Niederdruckvorratsbehälter, einer Überwachungsvorrichtung sowie einem Mittel (10) zur Druckverminderung, das in einen Bremskreis der Hinterachse des Fahrzeugs eingesetzt ist, um dort den Druck in bestimmten Fällen zu vermindern, wobei dieses Druckverminderungsmittel einen Regulierungskolben (14) aufweist, der in dichter Weise in einer Bohrung (13) gleitet und mittels einer Feder (16, 17) in der Richtung des Öffnens eines Regulierungsventils (15) beaufschlagt ist, dadurch gekennzeichnet, daß die Feder (16, 17) in einer dichten, mit einem inkompressiblen Fluid gefüllten Kammer angeordnet ist und daß ein Elektroventil (22) das Öffnen oder das Schließen einer Verbindung zwischen der Kammer und dem Niederdruckvorratsbehälter steuert.

2. Bremssystem nach Anspruch 1 für Kraftfahrzeuge mit einer Antiblockiervorrichtung (2), dadurch gekennzeichnet, daß die Verbindung bei einem Normalbetrieb der Antiblockierfunktion geschlossen ist, während sie im Falle einer Fehlfunktion der Antiblockierfunktion geöffnet ist.

3. Bremssystem nach Anspruch 1 oder 2, dadurch gekennzeichnet, daß die Verbindung im Falle eines Ausfalls eines Bremskreises geschlossen ist.
